# EUROPÄISCHE PATENTSCHRIFT

(11) **EP 1 926 564 B1**
(45) Veröffentlichungstag und Bekanntmachung des Hinweises auf die Patenterteilung: **15.06.2011**
(21) Anmeldenummer: 06805296.8
(22) Anmeldetag: 16.09.2006
(51) Int. Cl.: B08B 7/00, B08B 9/00, F01D 25/00, C23G 1/19

(54) **VERFAHREN ZUM REINIGEN VON HOHLRÄUMEN AN GASTURBINENBAUTEILEN**
METHOD OF CLEANING CAVITIES ON GAS TURBINE COMPONENTS
PROCEDE DE NETTOYAGE DE CAVITES DE COMPOSANTS DE TURBINES A GAZ

(30) Priorität: 24.09.2005 DE 102005045839
(43) Veröffentlichungstag der Anmeldung: 04.06.2008
(73) Patentinhaber: MTU Aero Engines GmbH, 80995 München (DE)
(72) Erfinder: THIEMANN, Karl-Georg, 30449 Hannover (DE)
(86) Internationale Anmeldenummer: PCT/DE2006/001634
(87) Internationale Veröffentlichungsnummer: WO 2007/033648

(56) Entgegenhaltungen:
- EP-A- 1 428 606
- EP-A1- 1 010 776
- DE-C1- 10 218 519
- JP-A- 5 078 875
- US-A- 5 618 353
- US-A1- 2005 126 593

## Beschreibung

Die Erfindung betrifft ein Verfahren zum Reinigen von Hohlräumen an Gasturbinenbauteilen, insbesondere an Gasturbinenschaufeln, gemäß dem Oberbegriff des Anspruchs 1.

Beim Betrieb von Gasturbinen können sich in Hohlräumen von Gasturbinenbauteilen, so z.B. in Hohlräumen von innengekühlten Gasturbinenlaufschaufeln, Verunreinigungen ablagern bzw. absetzen. Bei der Wartung von Gasturbinen können derartige Ablagerungen in den Hohlräumen von Gasturbinenbauteilen durch Röntgenverfahren detektiert werden, wobei dann, wenn derartigen Ablagerungen bzw. Verunreinigungen in den Hohlräumen der Gasturbinenbauteile festgestellt werden, diese Verunreinigungen bzw. Ablagerungen aus den Hohlräumen entfernt werden müssen. Dies erfolgt mit speziellen Reinigungsverfahren.

Aus dem Stand der Technik, nämlich der US 5,618,353, welcher ein Verfahren gemäß dem Oberbegriff des Anspruchs 1 ist es zur Reinigung von Hohlräumen an Gasturbinenbauteilen bereits bekannt, durch die Hohlräume ein erwärmtes, ätzendes Reinigungsmedium zu leiten, wobei im Anschluss an das Reinigungsmedium ein Spülmedium durch die Hohlräume geleitet wird. Werden Hohlräume an Gasturbinenbauteilen mit einem solchen Verfahren gereinigt, so genügen in etwa 90 % der gereinigten Bauteile den Anforderungen hinsichtlich des erzielten Reinigungsgrads. 10 % der gereinigten Bauteile hingegen erfüllen nicht die Anforderungen, was insbesondere dann der Fall ist, wenn die Gasturbine, deren Bauteile zu reinigen sind, unter extremen Umgebungsbedingungen betrieben wurde. Bei Gasturbinenflugtriebwerken ist dies dann der Fall, wenn dieselben unter heißen sowie sandigen Bedingungen betrieben werden. In diesem Fall kann mit dem aus dem Stand der Technik bekannten Verfahren keine effektive Reinigung von Hohlräumen an Gasturbinenbauteilen realisiert werden.

Hiervon ausgehend liegt der vorliegenden Erfindung das Problem zu Grunde, ein neuartiges Verfahren zum Reinigen von Hohlräumen an Gasturbinenbauteilen, insbesondere an Gasturbinenschaufeln, zu schaffen.

Dieses Problem wird durch ein Verfahren zum Reinigen von Hohlräumen an Gasturbinenbauteilen, insbesondere an Gasturbinenschaufeln, gemäß Anspruch 1 gelöst. Erfindungsgemäß wird vor der Behandlung des oder jedes Hohlraums mit Reinigungsmedium und Spülmedium der oder jeder Hohlraum des Gasturbinenbauteils mit Inertgas geflutet, wobei das Gasturbinenbauteil anschließend unter Aufrechterhaltung der Inertgasatmosphäre in dem oder jedem Hohlraum einer sich vorzugsweise wiederholenden thermischen Behandlung unterzogen wird, wobei das Bauteil hierzu in einer ersten Zeitspanne auf eine Temperatur erhitzt, für eine zweite Zeitspanne auf dieser Temperatur gehalten und.anschließend in einer dritten Zeitspanne abgekühlt wird, und wobei erst anschließend das Reinigungsmedium und Spülmedium durch den oder jeden Hohlraum geleitet werden.

Mit Hilfe der erfindungsgemäßen, thermischen Behandlung des Bauteils vor dem Einleiten des Reinigungsmediums sowie Spülmediums in den oder jeden Hohlraum können Verunreinigungen und Ablagerungen in den Hohlräumen aufgebrochen werden, so dass dieselben beim anschließenden Durchspülen des oder jeden Hohlraums mit Reinigungsmedium und Spülmedium effektiv aus dem oder jedem Hohlraum entfernt werden können. Nach dem Reinigen von Gasturbinenbauteilen im Bereich von Hohlräumen derselben mit Hilfe des erfindungsgemäßen Verfahrens genügen 100 % aller gereinigten Bauteile den Anforderungen hinsichtlich des erzielten Reinigungsgrads, was auch dann gilt, wenn Gasturbinenbauteile zu reinigen sind, die unter extremen Bedingungen betrieben wurden.

Nach einer vorteilhaften Weiterbildung der Erfindung wird das Bauteil in der ersten Zeitspanne, die zwischen 5 und 20 Sekunden beträgt, ausgehend von einer ersten Prozesstemperatur auf eine zweite Prozesstemperatur erhitzt, für die zweite Zeitspanne, die zwischen 10 und 60 Sekunden beträgt, auf dieser zweiten Prozesstemperatur gehalten wird, und anschließend in der dritten Zeitspanne, die zwischen 30 und 90 Sekunden beträgt, von der zweiten Prozesstemperatur auf die erste Prozesstemperatur abgekühlt wird. Dies erfolgt vorzugsweise mehrfach bzw. in Wiederholung.

Bevorzugte Weiterbildungen der Erfindung ergeben sich aus den Unteransprüchen und der nachfolgenden Beschreibung. Ausführungsbeispiele der Erfindung werden, ohne hierauf beschränkt zu sein, nachfolgend näher erläutert.

Die hier vorliegende Erfindung betrifft ein Verfahren zum Reinigen von Hohlräumen an Gasturbinenbauteilen, wie z.B. an innengekühlten Gasturbinenlaufschaufeln. Zur Reinigung solcher Gasturbinenbauteile werden dieselben vorzugsweise vor der Reinigung mit Hilfe eines Röntgenverfahrens untersucht, um den Grad der Verunreinigung vor dem Reinigen zu überprüfen bzw. festzustellen.

Im Sinne der hier vorliegenden Erfindung werden zu reinigende Gasturbinenbauteile, nämlich die zu reinigenden Hohlräume derselben, mit Inertgas bzw. Schutzgas geflutet: Bei dem Inertgas bzw. Schutzgas kann es sich z.B. um Argon, Helium, Neon, Nitrogen, Radon, Krypton oder auch Xenon handeln. Vorzugsweise wird das gesamte zu reinigende Bauteil in einer Atmosphäre aus Inertgas bzw. Schutzgas positioniert, so dass das gesamte Bauteils von Schutzgas umgeben ist und sämtliche Hohlräume desselben mit Schutzgas geflutet sind.

Nach dem Fluten des Bauteils mit Schutzgas wird das Bauteil einer thermischen Behandlung unterzogen. Diese thermische Handlung wird vorzugsweise mehrfach wiederholend durchgeführt, wobei die thermische Behandlung im Wesentlichen aus drei Teilschritten besteht, wobei das Bauteil in einem ersten Teilschritt innerhalb einer ersten Zeitspanne auf eine Temperatur erhitzt wird, in einem zweiten Teilschritt für eine zweite Zeitspanne auf dieser Temperatur gehalten wird, und anschließend in einem dritten Teilschritt in einer dritten Zeitspanne abgekühlt wird. Erst im Anschluss an diese vorzugsweise wiederholt durchgeführte thermische Behandlung wird Reinigungsmedium und anschließend Spülmedium durch den oder jeden Hohlraum des Gasturbinenbauteils geleitet.

Bei der thermischen Behandlung wird, wie bereits erwähnt, das Bauteil unter Inertgasatmosphäre bzw. Schutzgasatmosphäre in der ersten Zeitspanne ausgehend von einer ersten Prozesstemperatur auf eine zweite Prozesstemperatur erhitzt. Die erste Prozesstemperatur, nämlich die Ausgangstemperatur zum Erhitzen des Gasturbinenbauteils, liegt zwischen 280K und 320K, vorzugsweise in der Größenordnung der Raumtemperatur bei 295K. Die zweite Prozesstemperatur, auf die das Gasturbinenbauteil ausgehend von der ersten Prozesstemperatur erhitzt wird, liegt zwischen 1.200K und 1.300K, wobei das Erhitzen von der ersten Prozesstemperatur auf die zweite Prozesstemperatur innerhalb der ersten Zeitspanne erfolgt, die zwischen 5 Sekunden und 20 Sekunden, vorzugsweise 15 Sekunden, beträgt. Nach dem Aufheizen auf die zweite Prozesstemperatur wird das Gasturbinenbauteil innerhalb der zweiten Zeitspanne, die zwischen 10 Sekunden und 60 Sekunden, vorzugsweise 30 Sekunden beträgt, auf der zweiten Prozesstemperatur gehalten. Anschließend erfolgt ein Abkühlen des Bauteils ausgehend von der zweiten Prozesstemperatur vorzugsweise in etwa auf die erste Prozesstemperatur in der dritten Zeitspanne, die zwischen 30 Sekunden und 90 Sekunden, vorzugsweise 60 Sekunden, beträgt.

Hieraus folgt, dass die Gesamtzeitdauer einer einzelnen thermischen Behandlung bzw. eines Aufheiz- und Abkühl-Zyklus zwischen 45 Sekunden und 170 Sekunden, vorzugsweise 105 Sekunden, beträgt. Diese thermische Behandlung wird vorzugsweise mehrfach hintereinander durchgeführt, nämlich bis zu zehnmal, insbesondere bis zu sechsmal, hintereinander. Durch dieses aufeinanderfolgende Aufheizen und Abkühlen des Gasturbinenbauteils innerhalb der relativ kurzen Zeitspannen werden Ablagerungen und Verunreinigungen innerhalb der Hohlräume des Gasturbinenbauteils aufgebrochen, so dass dieselben während den nachfolgenden Verfahrensschritten leichter aus dem Hohlraum entfernt werden können.

An dieser Stelle sei darauf hingewiesen, dass das Aufheizen des Bauteils mit Hilfe einer Induktions-Heizeinrichtung oder mit Hilfe einer Laser-Heizeinrichtung erfolgen kann. Die Auswahl einer geeigneten Heizeinrichtung obliegt dem hier angesprochenen Fachmann.

Im Anschluss an die oben beschriebene, vorzugsweise wiederholt durchgeführte thermische Behandlung des Gasturbinenbauteils wird durch den oder jeden Hohlraum desselben ein ätzendes Reinigungsmedium geleitet. Bei dem ätzenden Reinigungsmedium handelt es sich um eine Hydroxidlösung, vorzugsweise um eine Lösung aus 35%igem bis 45%igem Kaliumhydroxid (KOH). Das ätzende Reinigungsmedium wird auf eine Temperatur zwischen 333K und 503K erhitzt, und das so temperierte Reinigungsmedium wird mit einem Druck zwischen 18 bar und 21 bar durch den oder jeden zu reinigenden Hohlraum des Gasturbinenbauteils geleitet. Das Reinigungsmedium wird dabei für eine Zeitdauer zwischen 480 Minuten und 700 Minuten durch den oder jeden Hohlraum des Gastürbinenbaüteils geleitet.

Im Anschluss an das Reinigungsmedium wird das Spülmedium durch den oder jeden Hohlraum des Gasturbinenbauteils geleitet. Bei dem Spülmedium handelt es sich entweder um entmineralisiertes Wasser oder um entionisiertes Wasser. Das Spülmedium verfügt vorzugsweise über eine Temperatur zwischen 278K und 372K und wird mit einem Druck zwischen 30 bar und 600 bar für eine Zeitdauer zwischen 5 Minuten und 30 Minuten durch den oder jeden Hohlraum des Gasturbinenbauteils geleitet. Das Spülmedium wird dabei mit 0,8 1/min bis 30 1/min durch den oder jeden Hohlraum des Gasturbinenbauteils gepumpt.

Im Anschluss an das Spülen des oder jedes Hohlraums mit Spülmedium erfolgt abschließend ein Trocknen des Bauteils bzw. des oder jeden Hohlraums desselben mit Druckluft.

Die so gereinigten Bauteile können dann abschließend wiederum mit Hilfe einer Röntgenuntersuchung inspiziert bzw. begutachtet werden. Mit dem erfindungsgemäßen Verfahren können auch stark beanspruchte Gasturbinenbauteile effektiv gereinigt werden, und zwar derart, dass 100 % aller gereinigten Bauteile den Anforderungen an die Reinigung genügen.

Das Durchleiten von Reinigungsmedium und Spülmedium durch den oder jeden Hohlraum des Gasturbinenbauteils kann ebenso wie die vorhergehende thermische Behandlung desselben mehrfach bzw. wiederholt ausgeführt werden. Die Behandlung des Bauteils mit Reinigungsmedium und Spülmedium wird zwischen einmal und viermal durchgeführt.

## Patentansprüche

1. Verfahren zum Reinigen von Hohlräumen an Gasturbinenbauteilen, insbesondere an Gasturbinenschaufeln, wobei hierzu durch den oder jeden zu reinigenden Hohlraum eines Gasturbinenbauteils insbesondere wiederholend ein ätzendes Reinigungsmedium und anschließend ein Spülmedium geleitet wird,
**dadurch gekennzeichnet,**
**dass** vorab der oder jede Hohlraum des Gasturbinenbauteils mit Inertgas geflutet wird, dass das Gasturbinenbauteil anschließend unter Aufrechterhaltung der Inertgasatmosphäre in dem oder jedem Hohlraum einer sich vorzugsweise wiederholenden thermischen Behandlung unterzogen wird, wobei das Bauteil hierzu in einer ersten Zeitspanne erhitzt, für eine zweite Zeitspanne auf dieser Temperatur gehalten und anschließend in einer dritten Zeitspanne abgekühlt wird, und dass anschließend das Reinigungsmedium und Spülmedium durch den oder jeden Hohlraum geleitet werden.

2. Verfahren nach Anspruch 1,
**dadurch gekennzeichnet,**
**dass** das Bauteil in der ersten Zeitspanne ausgehend von einer ersten Prozesstemperatur auf eine zweite Prozesstemperatur erhitzt wird, für eine zweite Zeitspanne auf dieser zweiten Prozesstemperatur gehalten wird, und anschließend in einer dritten Zeitspanne von der zweiten Prozesstemperatur in etwa auf die erste Prozesstemperatur abgekühlt wird.

3. Verfahren nach Anspruch 2,
**dadurch gekennzeichnet,**
**dass** die erste Prozesstemperatur zwischen 280K und 320K und die zweite Prozesstemperatur zwischen 1200K und 1300K liegt.

4. Verfahren nach einem oder mehreren der Ansprüche 1 bis 3,
**dadurch gekennzeichnet,**
**dass** die Zeitdauer einer einzelnen thermischen Behandlung, also die Summe aus erster Zeitspanne und zweiter Zeitspanne und dritter Zeitspanne, zwischen 45 und 170 Sekunden, vorzugsweise 105 Sekunden, beträgt.

5. Verfahren nach Anspruch 4,
**dadurch gekennzeichnet,**
**dass** die erste Zeitspanne zwischen 5 und 20 Sekunden, vorzugsweise 15 Sekunden, beträgt, dass die zweite Zeitspanne zwischen 10 und 60 Sekunden, vorzugsweise 30 Sekunden, beträgt, und dass die dritte Zeitspanne zwischen 30 und 90 Sekunden, vorzugsweise 60 Sekunden, beträgt.

6. Verfahren nach einem oder mehreren der Ansprüche 1 bis 5,
**dadurch gekennzeichnet,**
**dass** die thermische Behandlung bis zu zehnmal, vorzugsweise bis zu sechsmal, hintereinander jeweils unter Aufrechterhaltung der Inertgasatmosphäre in dem oder jedem Hohlraum durchgeführt wird.

7. Verfahren nach einem oder mehreren der Ansprüche 1 bis 6,
**dadurch gekennzeichnet,**
**dass** anschließend an die thermische Behandlung als ätzendes Reinigungsmedium eine Hydroxidlösung durch den oder jeden Hohlraum geleitet wird.

8. Verfahren nach Anspruch 7,
**dadurch gekennzeichnet,**
**dass** als ätzendes Reinigungsmedium eine 35%ige bis 45%ige Kaliumhydroxidlösung durch den oder jeden Hohlraum geleitet wird.

9. Verfahren nach Anspruch 7 oder 8,
**dadurch gekennzeichnet,**
**dass** die Hydroxidlösung mit einer Temperatur zwischen 333K und 503K bei einem Druck zwischen 18 bar und 21 bar für eine Zeitdauer zwischen 480 und 700 Minuten durch den oder jeden Hohlraum geleitet wird.

10. Verfahren nach einem oder mehreren der Ansprüche 1 bis 9,
**dadurch gekennzeichnet,**
**dass** anschließend an das Reinigungsmedium als Spülmedium entionisiertes Wasser durch den oder jeden Hohlraum geleitet wird.

11. Verfahren nach einem oder mehreren der Ansprüche 1 bis 9,
**dadurch gekennzeichnet,**
**dass** anschließend an das Reinigungsmedium als Spülmedium entmineralisiertes Wasser durch den oder jeden Hohlraum geleitet wird.

12. Verfahren nach einem oder mehreren der Ansprüche 1 bis 11,
**dadurch gekennzeichnet,**
**dass** das Spülmedium mit einer Temperatur zwischen 278K und 372K bei einem Druck zwischen 30 bar und 600 bar für eine Zeitdauer zwischen 5 und 30 Minuten durch den oder jeden Hohlraum geleitet wird.

## Claims

1. Method for cleaning cavities on gas turbine components, in particular on gas turbine blades, wherein for this purpose an etching cleaning medium and subsequently a rinsing medium are directed, in particular repeatedly, through the or each cavity of a gas turbine component to be cleaned,
**characterised in that**
beforehand the or each cavity of the gas turbine component is flooded with inert gas, **in that** the gasturbine component is subsequently subjected to preferably repetitive thermal treatment whilst maintaining the inert gas atmosphere in the or each cavity, wherein for this purpose the component is heated in a first time span, is kept at this temperature for a second time span and subsequently is cooled in a third time span, and **in that** subsequently the cleaning medium and rinsing medium are directed through the or each cavity.

2. Method according to claim 1,
**characterised in that**
the component is heated starting from a first process temperature to a second process temperature in the first time span, is kept at this second process temperature for a second time span, and subsequently is cooled from the second process temperature to approximately the first process temperature in a third time span.

3. Method according to claim 2,
**characterised in that**
the first process temperature lies between 280 K and 320 K, and the second process temperature lies between 1200 K and 1300 K.

4. Method according to one or more of claims 1 to 3,
**characterised in that**
the length of time of one single thermal treatment, that is, the sum of the first time span and second time span and third time span, amounts to between 45 and 170 seconds, preferably 105 seconds.

5. Method according to claim 4,
**characterised in that**
the first time span amounts to between 5 and 20 seconds, preferably 15 seconds, **in that** the second time span amounts to between 10 and 60 seconds, preferably 30 seconds, and **in that** the third time span amounts to between 30 and 90 seconds, preferably 60 seconds.

6. Method according to one or more of claims 1 to 5,
**characterised in that**
the thermal treatment is carried out up to ten times, preferably up to six times, in succession in each case whilst maintaining the inert gas atmosphere in the or each cavity.

7. Method according to one or more of claims 1 to 6,
**characterised in that**
after the thermal treatment a hydroxide solution is directed through the or each cavity as the etching cleaning medium.

8. Method according to claim 7,
**characterised in that**
a 35% to 45% potassium hydroxide solution is directed through the or each cavity as the etching cleaning medium.

9. Method according to claim 7 or 8,
**characterised in that**
the hydroxide solution is directed through the or each cavity at a temperature between 333 K and 503 K at a pressure between 18 bar and 21 bar for a length of time between 480 and 700 minutes.

10. Method according to one or more of claims 1 to 9,
**characterised in that**
after the cleaning medium deionized water is directed through the or each cavity as the rinsing medium.

11. Method according to one or more of claims 1 to 9,
**characterised in that**
after the cleaning medium demineralized water is directed through the or each cavity as the rinsing medium.

12. Method according to one or more of claims 1 to 11,
**characterised in that**
the rinsing medium is directed through the or each cavity at a temperature between 278 K and 372 K at a pressure between 30 bar and 600 bar for a length of time between 5 and 30 minutes.

## Revendications

1. Procédé de nettoyage de cavités de composants de turbines à gaz, en particulier d'aubes de turbines à gaz, dans lequel on fait passer, de préférence à plusieurs reprises, un fluide de nettoyage corrosif puis un fluide de rinçage à travers la cavité ou chaque cavité à nettoyer d'un composant de turbine à gaz,
**caractérisé en ce qu'**
on noie auparavant la cavité ou chaque cavité du composant de turbine à gaz avec un gaz inerte, on soumet ensuite le composant de turbine à gaz à un traitement thermique, de préférence répété, tout en maintenant l'atmosphère de gaz inerte dans la cavité ou dans chaque cavité, le composant étant dans un premier temps chauffé à cet effet, dans un deuxième temps maintenu à cette température puis refroidi dans un troisième temps, et **en ce qu'**on fait passer ensuite le fluide de nettoyage et le fluide de rinçage à travers la cavité ou chaque cavité.

2. Procédé selon la revendication 1,
**caractérisé en ce que**,
dans un premier temps, on chauffe le composant d'une première température de process à une deuxième température de process, dans un deuxième temps on le maintient à cette deuxième température de process puis dans un troisième temps, on le refroidit de la deuxième température de process approximativement à la première température de process.

3. Procédé selon la revendication 2,
**caractérisé en ce que**
la première température de process est comprise entre 280 K et 320 K et la deuxième température de process est comprise entre 1200 K et 1300 K.

4. Procédé selon l'une quelconque ou plusieurs des revendications 1 à 3,
**caractérisé en ce que**
la durée d'un traitement thermique, donc la somme du premier temps, du deuxième temps et du troisième temps, est comprise entre 45 et 170 secondes, de préférence égale à 105 secondes.

5. Procédé selon la revendication 4,
**caractérisé en ce que**
le premier temps est compris entre 5 et 20 secondes, de préférence est égal à 15 secondes, le deuxième temps est compris entre 10 et 60 secondes, de préférence est égal à 30 secondes, et le troisième temps est compris entre 30 et 90 secondes, de préférence est égal à 60 secondes.

6. Procédé selon l'une quelconque ou plusieurs des revendications 1 à 5,
**caractérisé en ce que**
le traitement thermique peut être réalisé jusqu'à dix fois, de préférence jusqu'à six fois, l'une derrière l'autre, chaque fois en maintenant l'atmosphère de gaz inerte dans la cavité ou dans chaque cavité.

7. Procédé selon l'une quelconque ou plusieurs des revendications 1 à 6,
**caractérisé en ce que**,
à la suite du traitement thermique, on fait passer une solution d'hydroxyde comme fluide de nettoyage corrosif à travers la cavité ou à travers chaque cavité.

8. Procédé selon la revendication 7,
**caractérisé en ce qu'**
on fait passer à travers la cavité ou chaque cavité, une solution d'hydroxyde de potassium à 35 à 45 % en tant que fluide de nettoyage corrosif.

9. Procédé selon la revendication 7 ou la revendication 8,
**caractérisé en ce que**
la solution d'hydroxyde passe à travers la cavité ou chaque cavité à une température comprise entre 333 K et 503 K, à une pression comprise entre 18 et 21 bars, pendant une durée comprise entre 480 et 700 minutes.

10. Procédé selon l'une quelconque ou plusieurs des revendications 1 à 9,
**caractérisé en ce que**,
suite au fluide de nettoyage, on fait passer dans la cavité ou chaque cavité de l'eau désionisée comme fluide de rinçage.

11. Procédé selon l'une quelconque ou plusieurs des revendications 1 à 9,
**caractérisé en ce que**,
suite au fluide de nettoyage, on fait passer à travers la cavité ou chaque cavité de l'eau déminéralisée comme fluide de rinçage.

12. Procédé selon l'une quelconque ou plusieurs des revendications 1 à 11,
**caractérisé en ce qu'**
on fait passer le fluide de rinçage à travers la cavité ou chaque cavité à une température comprise entre 278 K et 372 K, à une pression comprise entre 30 et 600 bars, pendant une durée comprise entre 5 et 30 minutes.
